Europäisches Patentamt

European Patent Office

Office européen des brevets

(19)

(11) Numéro de publication : **0 008 268**
**B1**

(12) **FASCICULE DE BREVET EUROPÉEN**

(45) Date de publication du fascicule du brevet :
30.09.81

(21) Numéro de dépôt : 79400543.9

(22) Date de dépôt : 01.08.79

(51) Int. Cl.³ : **F 22 B 1/02**, F 28 D 9/00,
F 25 B 39/02

(54) Echangeur évaporateur de chaleur à plaques.

(30) Priorité : 09.08.78 FR 7823474

(43) Date de publication de la demande :
20.02.80 (Bulletin 80/04)

(45) Mention de la délivrance du brevet :
30.09.81 Bulletin 81/39

(84) Etats contractants désignés :
DE GB SE

(56) Documents cités :
BE - A - 674 546
DE - A - 2 706 090

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Lauro, Fernand**
**33, rue Thiers**
**F-38000 Grenoble (FR)**
Inventeur : **Manon, Bernard**
**17, Chemin de Villebois**
**F-38000 Grenoble (FR)**
Inventeur : **Marie, Gérard**
**Rue Berlioz - Poisat**
**F-38320 Eybens (FR)**

(74) Mandataire : **Mongredien, André et al**
**c/o Brevatome 25, rue de Ponthieu**
**F-75008 Paris (FR)**

Imprimerie Jouve, 17, rue du Louvre, 75001 Paris, France

Echangeur évaporateur de chaleur à plaques

La présente invention se rapporte aux échangeurs évaporateurs de chaleur à plaques qui sont constitués comme on le sait par empilement d'un certain nombre de plaques rectangulaires percées chacune d'un orifice au voisinage du sommet du rectangle tel que décrit dans la première partie de la revendication 1.

Ces échangeurs évaporateurs à plaques sont utilisés, notamment dans les pompes à chaleur ou dans les techniques de récupération d'énergie solaire, pour vaporiser un fluide à bas point d'ébullition et le faire se détendre dans une machine thermique.

On commencera tout d'abord par rappeler, dans ses grandes lignes, la constitution d'un échangeur évaporateur de chaleur du type à plaques d'un genre en soi connu en se référant à la fig. 1 ci-jointe. Un tel échangeur est connu dans le FR-A-76822.

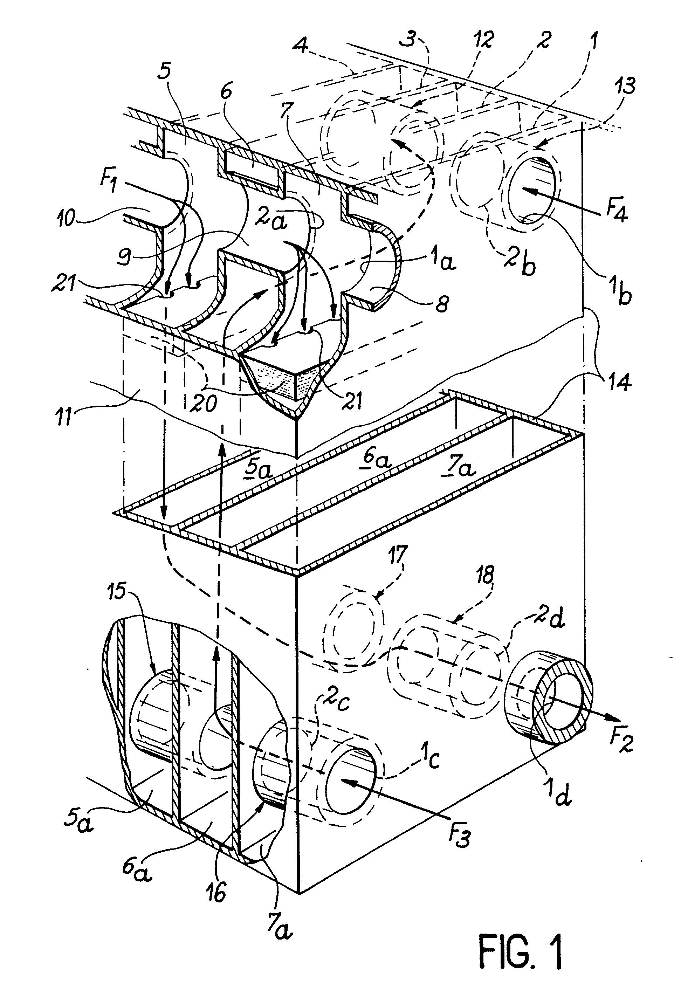

Sur la fig. 1 qui est une vue éclatée partielle d'une portion d'un tel échangeur, on a représenté quatre plaques rectangulaires voisines respectivement référencées 1, 2, 3 et 4 et qui délimitent entre elles trois compartiments parallélépipédiques respectivement 6, 7 et 5. Dans l'échangeur représenté sur la fig. 1, chacune des plaques 1, 2, 3 et 4 est munie de quatre orifices à savoir respectivement 1a, 1b, 1c et 1d pour la plaque n° 1, 2a, 2b, 2c et 2d pour la plaque n° 2, 3a, 3c, pour la plaque n° 3 et ainsi de suite, lesdits orifices étant situés au voisinage des sommets du rectangle constituant la plaque correspondante. Comme on le voit également sur la fig. 1, ces orifices alignés dans l'empilement de plaques, sont associés à des conduits tubulaires tels que 8, 9 et 10 grâce auxquels les orifices correspondants sont en communication avec un compartiment sur deux. Les conduits tubulaires 10 et 9 de la face avant 11 sur le dessin sont situés en alternance avec les conduits tubulaires 12 et 13 de la face arrière 14. Le même phénomène se reproduit à la base de l'échangeur où les conduits tubulaires 15 et 16 situés du côté de la face avant 11 sont en quinconce avec les conduits tubulaires 17 et 18 de la face arrière 14. Les conduits tubulaires peuvent être réalisés avec un joint écrasé à la cote de l'espace entre deux plaques consécutives. A la partie supérieure de la portion d'échangeur représentée, on voit, dans les compartiments 5 et 7, des plaques horizontales ou barrettes 20 qui délimitent deux portions distinctes dans chacun desdits compartiments 5 et 7. Ces barrettes sont percées d'un certain nombre de trous 21 le long de l'une des plaques adjacentes.

Le fonctionnement de l'appareil est le suivant : le fluide froid, qui peut être par exemple un composé facilement volatilisable comme le fréon (marque déposée), circule à la partie supérieure selon le trajet de la flèche $F_1$ à travers les différents orifices alignés et, après avoir traversé les conduits tubulaires 10 d'une part et 9 d'autre part, se répand dans des chambres d'alimentation situées à la partie supérieure des compartiments (5, 7) correspondants. Dans ces chambres d'alimentation, le fluide froid descend le long des parois en filets minces après avoir traversé les orifices 21 pour pénétrer dans les chambres de vaporisation 5a et 7a situées immédiatement en dessous des barrettes 20 des compartiments 5 et 7 ; il y subit l'échauffement au contact des plaques et se vaporise peu à peu pour sortir finalement selon le trajet de la flèche $F_2$. Le fluide chaud au contraire pénètre et circule dans l'appareil selon le trajet de la flèche $F_3$, parcourt les différents compartiments tels que 6 (1 sur 2 comme pour le fluide froid) alimentés directement et s'échappe après s'être refroidi dans l'échangeur, à la partie supérieure, selon le trajet de la flèche $F_4$.

Comme on le voit sur cette figure, l'échangeur est donc bien constitué de deux séries de compartiments adjacents, alternativement « froid » et « chaud » dans lesquels les fluides circulent à contre-courant ; le fluide froid est distribué à partir de chambres d'alimentation distinctes des chambres de vaporisation par l'artifice des barrettes 20 qui réalisent la séparation de ces deux dernières et permet grâce aux orifices d'écoulement 21 une distribution en forme de film du fluide froid le long de la plaque chaude adjacente.

On a trouvé, et c'est l'objet du perfectionnement de la présente invention, qu'il est encore possible d'améliorer de façon simple et efficace le fonctionnement d'un tel échangeur évaporateur en évitant certains inconvénients inhérents à leur principe et que l'on peut résumer comme suit.

En effet, lors du fonctionnement d'un tel échangeur évaporateur connu, conforme au schéma de la fig. 1, on a souvent constaté qu'il se produisait dans la partie haute de l'appareil, à savoir dans les chambres d'alimentation en fluide froid, une turbulence importante due à un commencement d'ébullition du liquide froid. On a cherché à remédier à ceci en disposant des cheminées d'équilibrage traversant de part en part les barrettes de séparation 20, mais ceci ne fait que réduire le phénomène sans le supprimer complètement. Or, cette turbulence, qui est d'autant plus importante que les différences de température entre deux compartiments adjacents « froid » et « chaud » sont plus importantes, conduit à une ébullition prématurée du fluide froid avant son introduction dans la chambre d'évaporation inférieure affectant ainsi gravement la régularité de l'alimentation de l'échangeur en fluide froid à travers les différents orifices 20 et par conséquent son rendement.

La présente invention a précisément pour objet un perfectionnement aux échangeurs évaporateurs du type rappelé précédemment qui permet de pallier facilement à l'aide de moyens simples les inconvénients énumérés ci-dessus.

Ce perfectionnement se caractérise essentiellement en ce que le conduit alimentant chaque compartiment parcouru par le fluide froid est constitué par une garniture en un matériau isolant thermique permettant de réaliser un gradient thermique plus important entre ledit fluide froid et les plaques dans le conduit d'alimentation en fluide froid et possédant un canal central axial relié par un conduit radial à chaque chambre d'alimentation en fluide froid de ce compartiment, ce conduit radial présentant une restriction du diamètre interne pour créer une perte de charge pour ledit fluide froid.

En disposant ainsi à l'entrée du fluide froid dans les chambres d'alimentation une garniture thermiquement isolante, et possédant un diamètre d'entrée restreint par rapport à l'orifice primitivement découpé dans chaque plaque, on cumule deux effets physiques différents qui permettent par leur action combinée de juguler complètement les phénomènes d'ébullition ou de réchauffement trop brutal du fluide froid lors de son introduction au sommet de l'échangeur.

En effet, le fait que le matériau constituant la garniture est isolant thermique crée un gradient thermique beaucoup plus important entre ledit fluide froid arrivant dans l'appareil et les plaques des diverses chambres d'alimentation. Ceci permet donc déjà de réduire l'écart de température auquel est soumis brutalement le fluide froid et retarde considérablement par conséquent le réchauffage de celui-ci. Par ailleurs, le fait que la garniture assure la distribution dans les compartiments « froids » au travers d'un orifice ou d'un conduit de dimensions très restreintes par rapport à ce qu'était le conduit primitif, fait subir au fluide froid une perte de charge importante qui maintient son taux de compression à un niveau relativement élevé et contribue ainsi fortement à empêcher l'ébullition de ce liquide dans la conduite d'alimentation elle-même. De ce fait, la distribution du liquide froid intervient beaucoup plus favorablement au travers des différents orifices 21 des plaques 20 et c'est seulement dans les chambres de vaporisation telles que 5a et 7a que se produit peu à peu le réchauffage et la vaporisation de ce même fluide froid.

Selon une autre caractéristique également intéressante de la présente invention, on a prévu d'équiper certaines au moins des barrettes de séparation entre les chambres d'alimentation et les chambres de vaporisation d'un redan à leur partie inférieure, lequel a pour but de renvoyer les gouttes de liquide, qui pourraient avoir tendance à s'échapper sous l'effet de la trop grande chaleur des plaques contre lesquelles elles doivent rester plaquées.

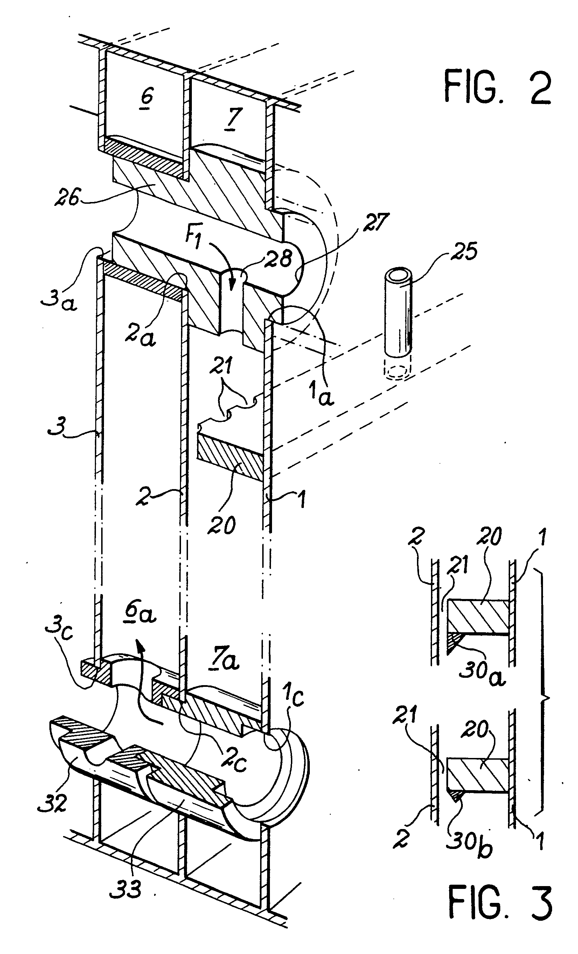

De toute façon, l'invention sera mieux comprise à la lecture de la description qui suit d'un exemple de mise en œuvre du perfectionnement aux échangeurs évaporateurs du type à plaques, description qui sera faite en référence aux figures 2 et 3 ci-jointes sur lesquelles :

— la figure 2 représente en coupe et perspective cavalière l'équipement d'une entrée de fluide froid selon l'invention ;

— la figure 3 représente deux exemples de redans utilisés pour contraindre le liquide à vaporiser à rester le plus possible le long d'une plaque chaude.

On reconnaît sur la figure 2 deux compartiments consécutifs 7 et 6 constitués par les plaques voisines 1, 2 et 3. Les plaques 1, 2 et 3 comportent les orifices 1a, 2a et 3a par lesquels pénètre le fluide froid à vaporiser selon le trajet de la flèche $F_1$. Dans le compartiment 7 se trouve la barrette 20 munie des orifices 21 et de la cheminée d'équilibrage 25 traversant la barrette 20 de part en part. La fonction de la cheminée 25 est de réaliser l'équilibre des pressions entre la chambre supérieure d'alimentation et la chambre de vaporisation 7a. Cet équilibre des pressions dans ces deux chambres procure une alimentation régulière en liquide des plaques d'échange. Cela donne une grande stabilité de fonctionnement de l'échangeur. Selon l'invention, une garniture 26 possédant un canal central axial 27 et constitué en un matériau isolant est insérée dans le passage réservé au fluide froid au travers des orifices 1a, 2a et 3a ; cette garniture 26 comporte au droit de la chambre d'alimentation un conduit radial 28 de faible section par rapport à celle des orifices 1a, 2a et 3a, conduit au travers duquel le fluide froid pénètre dans la chambre d'alimentation. Comme il a été expliqué précédemment, la garniture 26 remplit ainsi les deux fonctions, à savoir, éloigner au maximum de la plaque 2 le fluide froid circulant dans le canal axial 27 et dans le conduit 28 ; par ailleurs, le faible diamètre du conduit radial 28 crée une surpression du fluide froid dans le canal central 27 qui s'oppose simultanément à son ébullition. Le fluide froid peut donc s'écouler régulièrement et normalement le long de la plaque 2 au travers des orifices 21 de la barrette 20 et pénétrer dans la chambre de vaporisation 7a dans laquelle il subit effectivement cette vaporisation.

Il faut ajouter qu'on pourrait prévoir des séries d'orifices 21 de chaque côté de la barrette 20. Ainsi, le liquide froid peut s'écouler le long des deux plaques d'un même compartiment. Bien qu'il ne soit pas représenté sur les figures annexées, ce mode de réalisation se déduit aisément de celui de la figure 2.

On voit enfin, sur la figure 2, les pièces d'espacement 32 et 33 servant à maintenir l'écartement des plaques 1, 2 et 3 ; l'entretoise 32 assure également la distribution du fluide chaud dans le compartiment 6a.

La figure 3 représente deux modes de réalisation possibles 30a et 30b du redan situé à la partie inférieure de la barrette 20 du côté de la paroi chaude 2. Comme expliqué précédemment, cette disposition a pour but d'éviter que les gouttes de liquide froid qui descendent le long de la plaque 2 ne soient trop facilement écartées de cette dernière sous l'effet de la caléfaction au contact de la plaque chaude 2.

Selon l'invention, la garniture 26 peut être réalisée en un matériau isolant quelconque et peut être constituée notamment par l'empilement de pièces en forme de rondelles.

**Revendications**

1. Echangeur évaporateur de chaleur du type à plaques constitué de façon connue par empilement d'un certain nombre de plaques rectangulaires (1, 2, 3, 4) percées chacune de quatre orifices (1a, 1b, 1c, 1d ; 2a, 2b ...) au voisinage des sommets du rectangle et disposées dans un caisson constituant ainsi des compartiments parallélépipédiques juxtaposés (5, 6, 7), deux compartiments voisins étant parcourus à contre-courant respectivement l'un par le fluide chaud et l'autre par le fluide froid, les compartiments parcourus par le fluide froid comportant à leur sommet situé du côté de l'arrivée du fluide froid une barrette (20) percée de trous d'écoulement (21) délimitant une chambre d'alimentation en fluide froid et une chambre de vaporisation (5a, 7a) proprement dite où ledit fluide froid se vaporise en s'écoulant en filets minces au contact de la plaque, les quatre orifices (1a, 1b, 1c, 1d ; 2a, 2b ...) de chaque plaque servant respectivement à l'entrée et à la sortie des fluides froid et chaud, en ce sens que les orifices d'entrée de fluide froid (1a, 2a, 3a ...) et de fluide chaud (1c, 2c, 3c ...) et les orifices de sortie de vapeur (1d, 2d ...) et de fluide froid (1b, 2b ...) sont reliés entre eux par des conduits tubulaires respectifs (8, 9, 10...), (15, 16...), (17, 18...), (12, 13...) pour faire communiquer entre eux les compartiments parcourus par le même fluide, ces conduits tubulaires s'étendant à travers les compartiments parcourus par l'autre fluide, caractérisé en ce que le conduit alimentant chaque compartiment (5, 7...) parcouru par le fluide froid est constitué par une garniture (26) en un matériau isolant thermique permettant de réaliser un gradient thermique plus important entre ledit fluide froid et les plaques (1, 2, 3...) dans le conduit d'alimentation en fluide froid et possédant un canal central axial (27) relié par un conduit radial (28) à chaque chambre d'alimentation en fluide froid de ce compartiment, ce conduit radial (28) présentant une restriction du diamètre interne pour créer une perte de charge pour ledit fluide froid.

2. Echangeur évaporateur selon la revendication 1, caractérisé en ce que la barrette de séparation (20) entre la chambre d'alimentation et la chambre de vaporisation (5a, 7a) comporte en plus un redan (30a, 30b) à sa partie inférieure.

3. Echangeur évaporateur selon l'une quelconque des revendications 1 et 2, caractérisé en ce que chacune desdites barrettes (20) est traversée par une cheminée (25) d'équilibrage de pression entre les chambres d'alimentation et les chambres de vaporisation (5a, 7a).

**Claims**

1. Plate-type heat exchanger-evaporator constituted in known manner by stacking a plurality of rectangular plates (1, 2, 3, 4) each pierced by four orifices (1a, 1b, 1c, 1d ; 2a, 2b ...) near the corners of the rectangle and disposed in a container whereby to provide juxtaposed parallelepipedal compartments (5, 6, 7), two adjacent compartments being traversed respectively by a hot fluid and a cold fluid, the compartments traversed by cold fluid having at their corners adjacent the cold fluid intake a barrier (20) pierced by flow channels (21), separating a header for cold fluid and a vaporisation chamber (5a, 7a) in which the said cold fluid vaporises while flowing in thin streams in contact with the plate the four orifices (1a, 1b, 1c, 1d ; 2a, 2b ...) of each plate serving respectively for the entry and exit of the cold and hot fluids, the entry orifices for cold fluid (1a, 2a, 3a ...) and hot fluid (1c, 2c, 3c ...) and the exit orifices for vapour (1d, 2d ...) and cold fluid (1b. 2b ...) being connected by respective tubular conduits (8, 9, 10 ...), (15, 16 ...), (17, 18 ...), (12, 13 ...) for intercommunication of compartments traversed by the same fluid, said tubular conduits extending across the compartments traversed by the other fluid, characterized in that the conduit feeding each compartment (5, 7 ...) traversed by the cold fluid is constituted by a sleeve (26) of thermally insulating material permitting a greater thermal gradient between the said cold fluid and the plates (1, 2, 3 ...) in the feed conduit for cold fluid and possessing a central axial channel (27) connected by a radial conduit (28) to the header for cold fluid to the said compartment, the said radial conduit (28) having a restricted internal diameter to create a loss of pressure for the said cold fluid.

2. Exchanger-evaporator according to Claim 1 characterized in that the barrier (20) separating the header and the vaporization chamber (5a, 7a) has additionally a lip (30a, 30b) on its lower face.

3. Exchanger-evaporator according to either of Claims 1 and 2 characterized in that each of the said barriers (20) is traversed by a shaft (25) for equilibration of pressure between the headers and the vaporization chambers (5a, 7a).

**Ansprüche**

1. Verdampfungsplattenwärmetauscher, der in bekannter Weise durch Stapelung einer gewissen Anzahl von rechteckigen Platten (1, 2, 3, 4) gebildet ist, von denen jede in Nähe der Ecken des Rechtecks von vier Öffnungen (1a, 1b, 1c, 1d ; 2a, 2b, ...) durchbrochen und zur Bildung von aneinandergrenzenden parallelepipedförmigen Abteilen (5, 6, 7) in einem Behälter angeordnet ist, wobei zwei benachbarte Abteile jeweils durch das heisse Fluid bzw. durch das kalte Fluid im Gegenstrom durchströmt werden, wobei die vom kalten Fluid durchströmten Abteile an ihrer an der Ankunftsseite des kalten Fluids gelegenen Ecke einen von Strömungslöchern (21) durchbrochenen Steg (20) aufweisen, der eine Speisekammer zur Speisung mit kaltem Fluid und eine eigentliche Verdampfungskammer (5a, 7a) begrenzt, in der das kalte Fluid dadurch verdampft, dass es in dünnen Strahlen strömend die Platte berührt, wobei die vier Öffnungen (1a, 1b, 1c, 1d ; 2a, 2b ...) jeder Platte als Einlas bzw. Auslass für kalte bzw. heisse Fluide in dem Sinn dienen, dass die Einlassöffnungen für kaltes Fluid (1a, 2a, 3a ...) und heisses Fluid (1c, 2c, 3c) und die Auslassöffnungen für Dampf (1d, 2d ...) und für kaltes Fluid (1b, 2b ...) durch jeweilige rohrförmige Leitungen (8,9,10 ...) ; (15,16 ... ; 17,18 ... ; 12,13 ...) miteinander verbunden sind zur Verbindung der durch dasselbe Fluid durchströmten Abteile, wobei sich die rohrförmigen Leitungen durch die vom anderen Fluid durchströmten Abteile erstrecken, dadurch gekennzeichnet, dass die jedes vom kalten Fluid durchströmte Abteil (5, 7 ...) speisende Leitung durch eine Armatur (26) aus wärmeisolierendem Material gebildet ist, die einen grösseren Wärmeabfall zwischen dem kalten Fluid und den Platten (1, 2, 3 ...) in der Speiseleitung für kaltes Fluid ermöglicht und einen zentralen axialen Kanal (27) aufweist, der über radiale Leitungen (28) mit jeder Speisekammer zur Speisung dieses Abteils mit kaltem Fluid verbunden ist, wobei diese radiale Leitung (28) zur Erzeugung eines Druckabfalls für dieses kalte Fluid eine Verengung des Innendurchmessers aufweist.

2. Verdampfungsplattenwärmetauscher nach Anspruch 1, dadurch gekennzeichnet, dass der trennende Steg (20) zwischen der Speisekammer und der Verdampfungskammer (5a, 7a) an seinem Unterteil ausserdem eine Schikane (30a, 30b) aufweist.

3. Verdampfungsplattenwärmetauscher nach Anspruch 1 oder 2, dadurch gekennzeichnet, dass jeder der Stege (20) durch ein Druckausgleichsrohr (25) zwischen den Speisekammern und den Verdampfungskammern (5a, 7a) durchquert wird.

FIG. 1

FIG. 2

FIG. 3